# FASCICULE DE BREVET EUROPEEN

(11) **EP 2 504 986 B1**
(45) Date de publication et mention de la délivrance du brevet: **27.01.2016**
(21) Numéro de dépôt: 10803601.3
(22) Date de dépôt: 22.11.2010
(51) Int. Cl.: H04M 3/42, H04W 4/12

(54) **SELECTION D'UN MODE DE COMMUNICATION**
AUSWAHL EINES KOMMUNIKATIONSMODUS
COMMUNICATION MDE SELECTION

(30) Priorité: 26.11.2009 FR 0905688
(43) Date de publication de la demande: 03.10.2012
(73) Titulaire: ALCATEL LUCENT, 92100 Boulogne-Billancourt (FR)
(72) Inventeur: GHORBEL, Mahmoud, F-91620 Nozay (FR); KAMGA, Guy-Bertrand, F-91620 Nozay (FR); PIEKAREC, Sophie, F-91620 Nozay (FR); DUPONT, Marie-Pascale, F-91620 Nozay (FR)
(74) Mandataire: Mouney, Jérôme
(86) Numéro de dépôt international: PCT/FR2010/052469
(87) Numéro de publication internationale: WO 2011/064491

(56) Documents cités:
- EP-A1- 1 524 831
- WO-A1-2006/038962
- US-A1- 2003 138 087
- US-A1- 2009 006 528

## Description

La présente invention concerne le domaine des réseaux de communication et plus particulièrement la sélection d'un mode de communication dans un réseau.
Le récent développement des télécommunications a conduit à la multiplication des modes de communication permettant de mettre en contact deux interlocuteurs. Ainsi, notamment au niveau professionnel, cela a permis de faciliter les échanges entre des personnes éloignées les unes des autres au niveau géographique mais travaillant en coopération.
Néanmoins, cette multitude de possibilités pour joindre un interlocuteur peut également entraîner des pertes de temps si le destinataire n'est pas immédiatement accessible par le mode de communication choisi ou si l'appelant doit déterminer préalablement les modes de communication par lesquels le destinataire peut être joint.
Les solutions de l'état de la technique favorisant la mise en communication avec un interlocuteur comprennent:
- les réponses automatiques de courrier électronique qui indiquent à l'expéditeur du courrier électronique que l'interlocuteur n'est pas disponible (en congés par exemple) et le moment de sa prochaine disponibilité (date de retour de congés),
- les répondeurs téléphoniques qui permettent d'informer l'appelant d'une indisponibilité. Un exemple se trouve dans US 2009/006528. Néanmoins ces solutions ne s'appliquent qu'à un seul mode de communication et ne permettent pas de déterminer le mode de communication le plus adapté pour joindre un interlocuteur.

Le but de la présente invention est donc de surmonter les inconvénients précités de l'état de la technique et de proposer une méthode permettant de sélectionner le mode de communication le plus adapté afin de joindre un interlocuteur.

Ainsi, la présente invention concerne un procédé de sélection d'un mode de communication entre un premier et un deuxième utilisateur d'au moins un réseau de communication comprenant les étapes suivantes:
- réception d'une requête envoyée par le premier utilisateur afin d'être mis en communication avec le deuxième utilisateur,
- détermination des modes de communication disponibles entre le premier et le deuxième utilisateur en fonction d'au moins un paramètre de statut du deuxième utilisateur déduit de la localisation du dit deuxième utilisateur et d'une activité associée à cette localisation.

Selon un autre aspect de la présente invention, le, au moins un, paramètre de statut du deuxième utilisateur comprend la disponibilité dudit deuxième utilisateur.

Selon un aspect supplémentaire de la présente invention, la disponibilité du deuxième utilisateur est déterminée à partir d'un emploi du temps dudit deuxième utilisateur enregistré dans une base de données du réseau de sorte que les modes de communication disponibles sont déterminés en fonction des activités du deuxième utilisateur.

Selon un aspect additionnel de la présente invention, la disponibilité du deuxième utilisateur est déterminée à partir du statut dudit deuxième utilisateur dans un serveur de présence d'au moins un mode de communication dudit deuxième utilisateur.

Selon un aspect supplémentaire de la présente invention, le, au moins un, paramètre de statut du deuxième utilisateur tient compte de l'état de connexion, vis à vis d'un réseau de communication, d'au moins un équipement de communication du deuxième utilisateur.

Selon un aspect additionnel, le deuxième utilisateur définit les modes de communication non disponibles en fonction de son activité et/ou d'une importance de la communication.

Selon un aspect additionnel de la présente invention, la détermination des modes de communication disponibles comprend également la détermination d'au moins un paramètre de statut du premier utilisateur.

Selon un autre aspect de la présente invention, le, au moins un, paramètre de statut du premier utilisateur est déduit de la localisation dudit premier utilisateur.

Selon un aspect supplémentaire de la présente invention, le, au moins un, paramètre de statut du premier utilisateur tient compte des modes de communication accessibles sur tous les équipements dudit premier utilisateur.

Selon un aspect additionnel de la présente invention, le mode de communication est sélectionné par le premier utilisateur parmi les modes de communication disponibles.

Selon un autre aspect de la présente invention, le procédé comprend également une étape de sélection d'un mode de communication, parmi les modes de communication disponibles, en fonction d'un critère de préférence du deuxième utilisateur.

Selon un aspect supplémentaire de la présente invention, la requête envoyée par le premier utilisateur comprend au moins un mode de communication par lequel ledit premier utilisateur veut communiquer avec le deuxième utilisateur et dans lequel la détermination des modes de communication disponibles se limite à la détermination de la disponibilité dudit, au moins un, mode de communication spécifié dans la requête.

Selon un aspect additionnel de la présente invention, le procédé comprend également, lorsque le deuxième utilisateur n'est pas disponible une étape supplémentaire d'envoi au premier utilisateur d'un message comprenant la prochaine plage horaire de disponibilité du deuxième utilisateur et les modes de communication disponibles durant ladite plage horaire.

Selon un autre aspect de la présente invention, le procédé comprend également, lorsque le deuxième utilisateur n'est pas disponible une étape supplémentaire d'envoi au premier utilisateur d'un message comprenant les coordonnées d'au moins un troisième utilisateur pouvant être contacté en cas d'indisponibilité du deuxième utilisateur.

La présente invention concerne également un serveur d'un réseau de communication comprenant des moyens configurés pour:
- recevoir un requête d'un premier utilisateur du réseau de communication afin d'être mis en communication avec un deuxième utilisateur du réseau de communication,
- déterminer les modes de communication disponibles entre le premier et le deuxième utilisateur en fonction d'au moins un paramètre de statut du deuxième utilisateur déduit de la localisation du dit deuxième utilisateur et d'une activité associée à cette localisation.

Selon un autre mode de réalisation, les moyens configurés pour déterminer les modes de communication disponibles comprennent une base de données dans laquelle sont enregistrées des informations concernant l'historique du statut et des moyens de communication utilisés par le deuxième utilisateur lors des précédentes demandes de communication, des moyens d'interaction avec un équipement de recherche, des moyens de traitement des informations reçues d'un équipement de recherche d'informations contextuelles et de profiles d'utilisateurs et des informations contenues dans la base de données et des moyens d'interaction avec une plateforme de communication gérant les différents modes de communications disponibles.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma d'un initiateur voulant communiquer avec un destinataire;
- la figure 2 représente un schéma synoptique des différentes étapes d'un mode de réalisation de la présente invention;
- la figure 3 représente un schéma d'un dispositif selon un mode de réalisation de la présente invention;

Dans la description qui va suivre, on désigne de façon générale:
Le terme «mode de communication accessible à un utilisateur» correspond à un mode de communication dont l'utilisateur possède au moins un équipement permettant d'utiliser ce mode de communication.
Le terme «mode de communication disponible » correspond à un mode de communication dont l'initiateur et le destinataire possèdent les équipements permettant d'utiliser ce mode de communication.

Les modes de réalisation de la présente invention concernent la détermination du mode de communication le plus adapté lorsqu'un utilisateur d'un réseau de communication veut communiquer avec un interlocuteur.

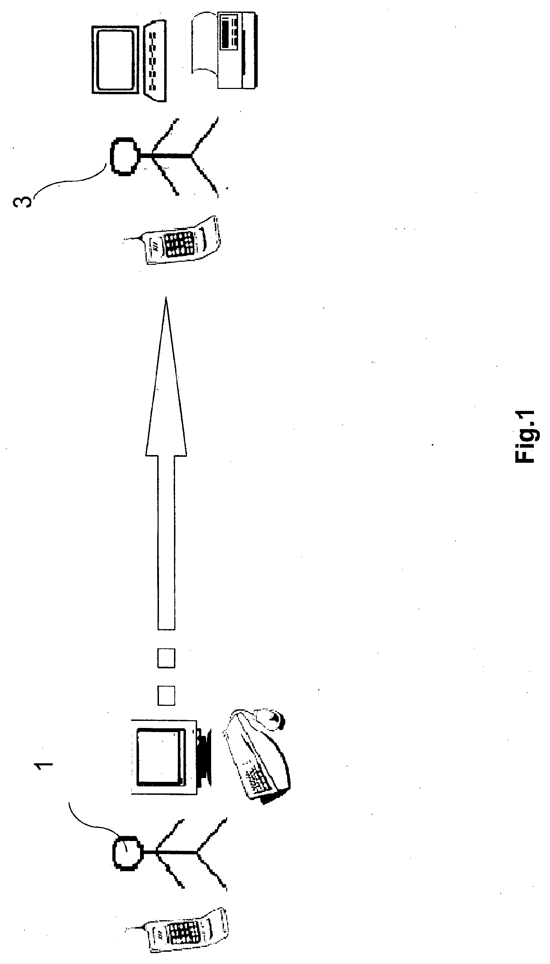

La figure 1 représente un schéma d'un premier utilisateur ayant plusieurs modes de communication à sa disposition et correspondant à un initiateur 1 qui désire communiquer avec un deuxième utilisateur correspondant au destinataire 3.

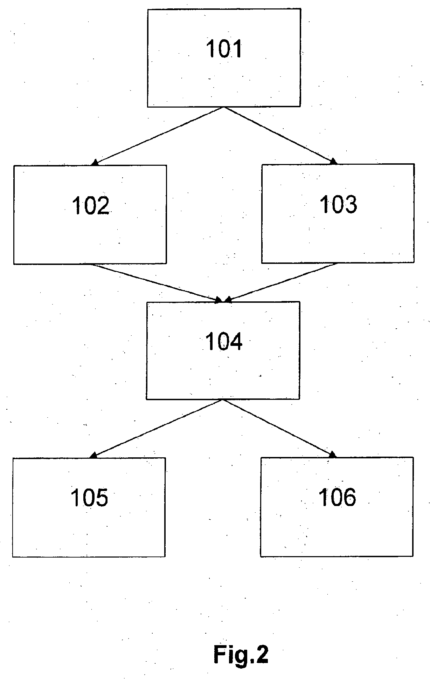

La figure 2 représente les différentes étapes d'un mode de réalisation de la présente invention.

La première étape 101 concerne l'envoi d'une requête de mise en communication par l'initiateur 1 vers un serveur du réseau auquel il est connecté. La requête comprenant un identifiant du destinataire 3. La réception de cette requête au niveau du serveur déclenche d'une part la détermination des modes de communication accessibles par le destinataire 3 (étape 102) et d'autre part les modes de communication accessibles par l'initiateur 1 (étape 103).

Ces étapes (102 et 103) de détermination de l'accessibilité des utilisateurs peuvent prendre en compte différentes informations comme des informations personnelles (équipements de communication actifs, emploi du temps,...) enregistrées dans une base de données, mais aussi la détermination du statut de connexion sur un mode de communication (via un serveur de présence par exemple) ou la localisation de l'utilisateur (par exemple par la localisation d'un de ses équipements de communication portables).

L'étape 104 correspond à la sélection, à partir des informations fournies par les étapes 102 et 103 du mode de communication le plus adapté afin de mettre en communication l'initiateur 1 et le destinataire 3.

Dans le cas où plusieurs modes de communication sont accessibles par les deux utilisateurs, la sélection peut se faire à partir des préférences du destinataire 3 et/ou de l'initiateur 1. Ces préférences peuvent être enregistrées dans une base de données ou, dans le cas de l'initiateur 1, un choix comprenant les modes de communication disponibles peut être proposé.

Si, à l'issue de l'étape 104, un mode de communication est sélectionné, une communication par le biais de ce mode de communication est alors initiée (étape 105).

Si aucun mode de communication n'est accessible, un message est alors envoyé à l'initiateur 1 (étape 106). Ce message comprend l'information qu'aucun mode de communication n'est accessible actuellement mais peut également comprendre des informations sur la prochaine plage horaire durant laquelle le destinataire 3 pourra être joint (et éventuellement la planification d'une communication différée) ou éventuellement les coordonnées d'un autre utilisateur pouvant être joint pendant l'inaccessibilité du destinataire 3.

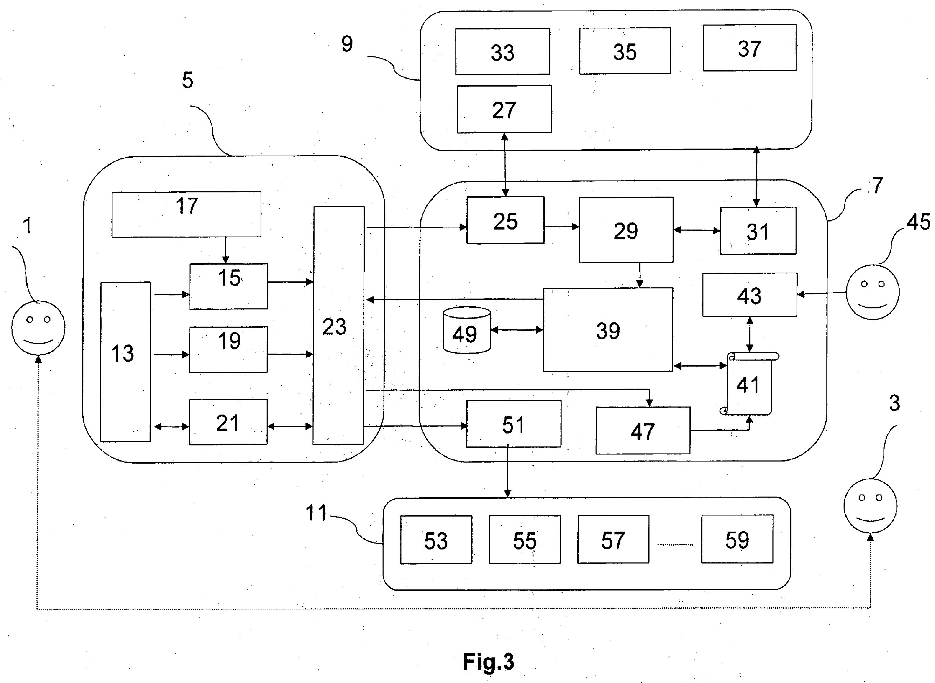

La mise en oeuvre d'un mode de réalisation de la présente invention va maintenant être décrite en détails à partir des équipements présentés sur la figure 3. Ces équipements peuvent être regroupés en quatre parties:
- un équipement client 5 correspondant à la partie située au niveau de l'équipement de communication de l'utilisateur (aussi bien au niveau de l'initiateur 1 que du destinataire 3);
- un serveur de communication 7;
- un équipement de recherche d'informations contextuelles et de profils d'utilisateurs 9;
- une plateforme de communication 11;
l'équipement de recherche 9 et la plateforme de communication 11 étant des structures déjà existantes auxquelles les modes de réalisation de l'invention font appel, les équipements spécifiques à l'invention étant situés au niveau de l'équipement client 5 et du serveur 7.

L'équipement utilisateur 5 comprend une interface graphique 13 qui permet à un utilisateur de créer une requête de demande de communication et de recevoir les informations concernant cette demande de communication. Cette interface 13 peut également servir pour configurer des paramètres de préférence ou d'intimité.

L'équipement utilisateur 5 comprend également un analyseur de contexte local 17 qui analyse les informations concernant les modes de communication de l'utilisateur comme une connexion Internet, un protocole d'initiation de session client, l'activation d'une messagerie instantanée, le statut de présence de l'utilisateur dans une messagerie instantanée,....

L'interface graphique 13 est reliée à une interface de requête 15 qui permet de fédérer les intentions de l'initiateur 1 et les informations contextuelles locales transmises par l'analyseur de contexte local 17 afin de formuler la requête envoyée au serveur. L'utilisateur peut définir ses préférences grâce à cette interface 15, il peut par exemple spécifier le type de communication qu'il désire (synchrone ou asynchrone, immédiate ou différée, urgente ou pas, importante ou pas,...).

L'interface graphique 13 est également reliée à une interface d'intimité 19. Cette interface d'intimité 19 permet à l'utilisateur de définir les modes de communication qu'il autorise en fonction du moment ou de son activité. Il peut, par exemple, définir qu'il est joignable sur son téléphone portable en cas d'urgence mais qu'il ne veut pas que son numéro de téléphone soit transmis à l'initiateur de l'appel.

L'équipement utilisateur 5 comprend également un gestionnaire d'affichage 21 qui organise l'affichage correspondant aux informations provenant du serveur 7, il permet dans le cas ou un mode de communication a été sélectionné de mettre en place la communication via ce mode.

Les échanges entre l'équipement utilisateur 5 et le serveur 7 se font par l'intermédiaire d'un courtier 23 qui envoient les informations échangées vers les éléments d'équipement concernés.

Au niveau du serveur de communication 7, la requête est réceptionné par un analyseur de requête 25 qui détermine:
- les identités de l'initiateur 1 et du destinataire 3;
- les informations de contact (numéro de téléphone, adresse électronique, paramètres d'identification de communication,...) concernant l'initiateur 1 et le destinataire 3;

Ces informations sont obtenues à partir de la requête de communication et du répertoire 27 de l'équipement de recherche 9 et sont transmises à un détecteur de disponibilité des modes de communication 29. Le rôle de ce détecteur de disponibilité 29 est de définir les modes de communication disponibles, c'est-à-dire les modes de communication accessibles aux deux utilisateurs au moment de la réception de la requête. Pour cela, le détecteur de disponibilité utilise, d'une part les informations collectées par l'analyseur de contexte local 17 et transmises dans la requête et d'autre part les informations fournies par le gestionnaire de contexte 31.

Le gestionnaire de contexte 31 récupère les informations contextuelles à partir de l'équipement de recherche d'informations contextuelles et de profiles d'utilisateurs 9 et notamment à partir de l'emploi du temps 33, du serveur de présence 35 ou de l'équipement de localisation 37.

Les informations concernant les modes de communication disponibles sont ensuite transmises du détecteur de disponibilité 29 au sélectionneur de mode de communication 39.

La sélection se fait sur les modes de communication disponibles à l'aide de règles de sélection 41 établies à partir d'une interface de configuration 43 gérée par un administrateur 45. Cette interface de configuration 43 définit les paramètres de configuration permettant d'établir les règles de sélection 41. Une reconfiguration de ces paramètres peut être effectuée à n'importe quel moment par l'administrateur 45. De plus, l'établissement des règles de sélection 41 se fait à l'aide d'un gestionnaire d'intimité 47 qui communique avec l'interface d'intimité 19 de l'équipement utilisateur 5.

Ainsi, les règles de sélection 41 rassemblent toutes les contraintes qui doivent être prises en compte lors de la sélection du mode de communication le plus approprié. Ces règles peuvent être exprimées avec n'importe quel langage de programmation et avec n'importe quelle logique comme par exemple une logique du premier ordre (First Order -Logic), une logique de type F (Grammar logic), une logique floue (Fuzzy logic) ou un réseau neuronal...

De plus, selon un mode de réalisation, les règles de sélection 41 supportent des variations dynamiques permettant de prendre en compte des modifications d'intimité ou de configuration.

Par ailleurs, le sélecteur de mode de communication 39 peut utiliser les données correspondant à l'historique des modes de communication utilisés par les utilisateurs et sauvegardées dans une base de données 49.

D'autre part, dans le cas où aucun mode de communication n'est disponible, le système peut proposer à l'initiateur 1 de contacter un autre utilisateur disponible qui pourrait remplacer le destinataire initial 3 (par exemple si le destinataire est en congés, un de ces collaborateurs peut-être désigné comme interlocuteur remplaçant privilégié dans les préférences du destinataire initial 3).

Le résultat de la sélection est alors renvoyé à l'initiateur 1 par l'intermédiaire de son équipement utilisateur 5 et dans le cas où un mode de communication a été sélectionné, la communication correspondante est mise en place au niveau de la plateforme de communication 11 par l'intermédiaire d'une interface de communication 51.

La plateforme de communication regroupe les serveurs de l'ensemble des modes de communication comme par exemple un serveur téléphonique 53, un serveur de courrier électronique 55, un serveur de messagerie instantanée 57 ou un serveur de mini-messages (SMS) 59...

Ainsi, si le mode de communication sélectionné est un appel téléphonique, l'interface de communication transmet à la plateforme de communication 11 et en particulier au serveur téléphonique 53, les numéros de téléphone des deux utilisateurs et la communication téléphonique est initiée.

Selon un mode de réalisation, un appel différé peut également être configuré si par exemple le destinataire est occupé mais sera disponible pour une communication à une heure précise.

Afin de mieux comprendre la présente invention, un exemple d'utilisation va maintenant être décrit.

Un employé d'une entreprise, se trouvant dans son bureau, veut communiquer avec son directeur afin de finaliser un projet. Ainsi, l'employé, à l'aide de l'interface graphique 13 de son ordinateur envoie une requête de mise en communication. De plus, dans ses préférences, l'employé a sélectionné en priorité les modes de communication directs (téléphone, visioconférence...) et a spécifié le fait que sa communication n'était pas très urgente.

La requête est reçue par le serveur 7. Les informations contextuelles concernant l'employé et son directeur sont alors analysées. La localisation de l'employé (dans son bureau) et les modes de communication accessibles correspondants sont alors déterminés. De même, l'emploi du temps du directeur indique qu'il est en déplacement et en réunion, ses modes de communication sont alors limités de sorte que seules les communications par mini-messages ou par téléphone (sur son téléphone portable) sont disponibles. Néanmoins, le directeur a sélectionné dans ses préférences que les appels téléphoniques pendant ses réunions ne devaient être réservés qu'aux communications urgentes de sorte que c'est la communication par mini-message qui est sélectionné.

Ainsi, une réponse est envoyée à l'employé indiquant que seule la communication par mini-message est disponible actuellement. De plus, comme ses préférences favorisaient les communications directes, la mise en place d'une communication téléphonique différée (dont l'heure correspond à l'horaire de la fin de la réunion de son directeur) lui est aussi proposée.

L'employé choisit cette deuxième alternative et une conformation qu'une communication téléphonique sera mise en place à 18 heures (horaire de la fin de la réunion) s'affiche alors sur son écran.

De plus, à 18 heures, un message lui est envoyé afin de lancer l'appel téléphonique. L'employé n'a alors qu'à confirmer sa demande et la communication est mise en place au niveau du serveur téléphonique.

Les modes de réalisation de la présente invention permettent donc à un utilisateur de déterminer de manière efficace et automatique le mode de communication le plus approprié afin d'être mis en communication avec un autre utilisateur en tenant compte de l'ensemble des paramètres de statut (accessibilité, disponibilité, intimité, préférences...) de chaque interlocuteur. Ainsi, l'utilisateur évite les pertes de temps liées aux différentes tentatives de mise en communication avec son interlocuteur et est dirigé automatiquement vers le mode de communication le plus approprié. Cela permet, par exemple, au sein d'une entreprise, d'améliorer la productivité des employés en simplifiant leurs démarches pour communiquer et en utilisant efficacement l'ensemble des moyens de communication à leur disposition.

## Revendications

1. Procédé de sélection d'un mode de communication entre un premier et un deuxième utilisateur d'au moins un réseau de communication comprenant les étapes suivantes:
- réception d'une requête envoyée par le premier utilisateur afin d'être mis en communication avec le deuxième utilisateur (101),
- détermination des modes de communication disponibles entre le premier et le deuxième utilisateur en fonction d'au moins un paramètre de statut du deuxième utilisateur (102 et 103) déduit de la localisation du dit deuxième utilisateur et d'une activité associée à cette localisation

2. Procédé de sélection d'un mode de communication selon la revendication 1 dans lequel le, au moins un, paramètre de statut du deuxième utilisateur comprend la disponibilité dudit deuxième utilisateur.

3. Procédé de sélection d'un mode de communication selon la revendication 2 dans lequel la disponibilité du deuxième utilisateur est déterminée à partir d'un emploi du temps (33) dudit deuxième utilisateur enregistré dans une base de données du réseau de sorte que les modes de communication disponibles sont déterminés en fonction des activités du deuxième utilisateur.

4. Procédé de sélection d'un mode de communication selon la revendication 2 ou 3 dans lequel la disponibilité du deuxième utilisateur est déterminé à partir du statut dudit deuxième utilisateur dans un serveur de présence (35) d'au moins un mode de communication dudit deuxième utilisateur.

5. Procédé de sélection d'un mode de communication selon l'une des revendications précédentes dans lequel le, au moins un, paramètre de statut du deuxième utilisateur tient compte de l'état de connexion, vis à vis d'un réseau de communication, d'au moins un équipement de communication du deuxième utilisateur.

6. Procédé de sélection d'un mode de communication selon l'une des revendications précédentes dans lequel le deuxième utilisateur définit les modes de communication non disponibles en fonction de son activité et/ou d'une importance de la communication.

7. Procédé de sélection d'un mode de communication selon l'une des revendications précédentes dans lequel la détermination des modes de communication disponibles comprend également la détermination d'au moins un paramètre de statut du premier utilisateur.

8. Procédé de sélection d'un mode de communication selon la revendication 7 dans lequel le, au moins un, paramètre de statut du premier utilisateur est déduit de la localisation dudit premier utilisateur.

9. Procédé de sélection d'un mode de communication selon la revendication 7 ou 8 dans lequel le, au moins un, paramètre de statut du premier utilisateur tient compte des modes de communication accessibles sur tous les équipements dudit premier utilisateur.

10. Procédé de sélection d'un mode de communication selon l'une des revendications précédentes dans lequel le mode de communication est sélectionné par le premier utilisateur parmi les modes de communication disponibles.

11. Procédé de sélection d'un mode de communication selon l'une des revendications 1 à 9 comprenant également une étape de sélection d'un mode de communication, parmi les modes de communication disponibles, en fonction d'un critère de préférence du deuxième utilisateur (104).

12. Procédé de sélection d'un mode de communication selon l'une des revendications précédentes dans lequel la requête envoyée par le premier utilisateur comprend au moins un mode de communication par lequel ledit premier utilisateur veut communiquer avec le deuxième utilisateur et dans lequel la détermination des modes de communication disponibles se limite à la détermination de la disponibilité dudit, au moins un, mode de communication spécifié dans la requête.

13. Procédé de sélection d'un mode de communication selon l'une des revendications précédentes comprenant également, lorsque le deuxième utilisateur n'est pas disponible une étape supplémentaire d'envoi au premier utilisateur d'un message comprenant la prochaine plage horaire de disponibilité du deuxième utilisateur et les modes de communication disponibles durant ladite plage horaire.

14. Procédé de sélection d'un mode de communication selon l'une des revendications précédentes comprenant également, lorsque le deuxième utilisateur n'est pas disponible une étape supplémentaire d'envoi au premier utilisateur d'un message comprenant les coordonnées d'au moins un troisième utilisateur pouvant être contacté en cas d'indisponibilité du deuxième utilisateur (106).

15. Serveur d'un réseau de communication comprenant des moyens configurés pour:
- recevoir une requête d'un premier utilisateur du réseau de communication afin d'être mis en communication avec un deuxième utilisateur du réseau de communication,
- déterminer les modes de communication disponibles entre le premier et le deuxième utilisateur en fonction d'au moins un paramètre de statut du deuxième utilisateur déduit de la localisation du dit deuxième utilisateur et d'une activité associée à cette localisation.

16. Serveur d'un réseau de communication selon la revendication 15 dans lequel les moyens configurés pour déterminer les modes de communication disponibles comprennent une base de données dans laquelle sont enregistrées des informations concernant l'historique du statut et des moyens de communication utilisés par le deuxième utilisateur lors des précédentes demandes de communication, des moyens d'interaction avec un équipement de recherche, des moyens de traitement des informations reçues d'un équipement de recherche d'informations contextuelles et de profiles d'utilisateurs et des informations contenues dans la base de données et des moyens d'interaction avec une plateforme de communication gérant les différents modes de communications disponibles.

## Patentansprüche

1. Verfahren zur Auswahl eines Kommunikationsmodus zwischen einem ersten und einem zweiten Benutzer mindestens eines Kommunikationsnetzes, folgende Schritte umfassend:
- Eingang einer von dem ersten Benutzer ausgegebenen Anforderung, mit dem zweiten Benutzer (101) in Verbindung gesetzt zu werden,
- Festlegung der zwischen dem ersten und dem zweiten Benutzer verfügbaren Kommunikationsmodi basierend auf mindestens einem Statusparameter des zweiten Benutzers (102 und 103) anhand des Aufenthaltsortes des besagten zweiten Benutzers und einer mit diesem Ort in Verbindung gebrachten Aktivität.

2. Verfahren zur Auswahl eines Kommunikationsmodus nach Anspruch 1, bei dem mindestens ein Statusparameter des zweiten Benutzers die Verfügbarkeit des besagten zweiten Benutzers umfasst.

3. Verfahren zur Auswahl eines Kommunikationsmodus nach Anspruch 2, bei dem die Verfügbarkeit des zweiten Benutzers ausgehend von der Zeitplanung (33) des besagten zweiten Benutzers ermittelt wird, die in einer Datenbank des Netzwerkes registriert ist, so dass die verfügbaren Kommunikationsmodi anhand der Aktivitäten des zweiten Benutzers ermittelt werden.

4. Verfahren zur Auswahl eines Kommunikationsmodus nach Anspruch 2 oder 3, bei dem die Verfügbarkeit des zweiten Benutzers aufgrund des Status des besagten zweiten Benutzers in einem Präsenzserver (35) mindestens eines Kommunikationsmodus des besagten zweiten Benutzers festgelegt ist.

5. Verfahren zur Auswahl eines Kommunikationsmodus nach einem der vorstehenden Ansprüche, bei dem der mindestens eine Statusparameter des zweiten Benutzers den Verbindungsstatus mit einem Kommunikationsnetz mindestens eines Kommunikationsgeräts des zweiten Benutzers berücksichtigt.

6. Verfahren zur Auswahl eines Kommunikationsmodus nach einem der vorstehenden Ansprüche, bei dem der zweite Benutzer die nicht verfügbaren Kommunikationsmodi aufgrund seiner Aktivität und/oder einer Bedeutung der Kommunikation festlegt.

7. Verfahren zur Auswahl eines Kommunikationsmodus nach einem der vorstehenden Ansprüche, bei dem die Ermittlung der verfügbaren Kommunikationsmodi auch die Ermittlung mindestens eines Statusparameters des ersten Benutzers umfasst.

8. Verfahren zur Auswahl eines Kommunikationsmodus nach Anspruch 7, bei dem der mindestens eine Statusparameter des ersten Benutzers aus dem Standort des besagten ersten Benutzers abgeleitet wird.

9. Verfahren zur Auswahl eines Kommunikationsmodus nach Anspruch 7 oder 8, bei dem der mindestens eine Statusparameter des ersten Benutzers die erreichbaren Kommunikationsmodi aller Geräte des besagten ersten Benutzers berücksichtigt.

10. Verfahren zur Auswahl eines Kommunikationsmodus nach einem der vorstehenden Ansprüche, bei dem der erste Benutzer der Kommunikationsmodus aus den verfügbaren Kommunikationsmodi auswählt.

11. Verfahren zur Auswahl eines Kommunikationsmodus nach einem der Ansprüche 1 bis 9, das ebenfalls eine Auswahlphase eines Kommunikationsmodus aus den verfügbaren Kommunikationsmodi je nach einem Präferenzkriterium des zweiten Benutzers (104) umfasst.

12. Verfahren zur Auswahl eines Kommunikationsmodus nach einem der vorstehenden Ansprüche, bei dem die von dem ersten Benutzer ausgegebene Anfrage mindestens einen Kommunikationsmodus umfasst, über die der besagte erste Benutzer mit dem zweiten Benutzer kommunizieren will und bei dem die Ermittlung der verfügbaren Kommunikationsmodi sich auf die Ermittlung der Verfügbarkeit des besagten mindestens einen in der Anfrage angegebenen Kommunikationsmodus beschränkt.

13. Verfahren zur Auswahl eines Kommunikationsmodus nach einem der vorstehenden Ansprüche, das, wenn der zweite Benutzer nicht verfügbar ist, auch eine weitere Phase umfasst, in der dem ersten Benutzer eine Meldung mit dem nächsten Erreichbarkeitszeitraum des zweiten Benutzers und die verfügbaren Kommunikationsmodi im besagten Zeitraum mitgeteilt werden.

14. Verfahren zur Auswahl eines Kommunikationsmodus nach einem der vorstehenden Ansprüche, das, wenn der zweite Benutzer nicht verfügbar ist, eine weitere Phase umfasst, in der dem ersten Benutzer eine Meldung mit den Kontaktdaten mindestens eines dritten Benutzers mitgeteilt wird, der bei Nichtverfügbarkeit des zweiten Benutzers (106) kontaktiert werden kann.

15. Server eines Kommunikationsnetzwerkes, der Mittel umfasst, die konfiguriert sind, um:
- eine Anfrage eines ersten Benutzers des Kommunikationsnetzes zu entgegenzunehmen, um mit einem zweiten Benutzer des Kommunikationsnetzes in Verbindung gesetzt zu werden,
- die zwischen dem ersten und dem zweiten Benutzer verfügbaren Kommunikationsmodi basierend auf mindestens einem Statusparameter des zweiten Benutzers anhand des Standortes des besagten zweiten Benutzers und einer mit diesem Ort verbundenen Aktivität zu ermitteln.

16. Server eines Kommunikationsnetzes nach Anspruch 15, in dem die konfigurierten Mittel zur Ermittlung der verfügbaren Kommunikationsmodi eine Datenbank umfassen, in der Informationen registriert sind über den Statusverlauf und die Kommunikationsmittel, die der zweite Benutzer bei den vorherigen Kommunikationsanfragen benutzt hat, über Interaktionsmittel mit einer Suchvorrichtung, Mittel zur Bearbeitung der von einer Vorrichtung zur Suche kontextueller Informationen und Benutzerprofile eingehenden Informationen und Informationen in der Datenbank und Interaktionsmittel mit einer Kommunikationsplattform, die die verschiedenen verfügbaren Kommunikationsmodi verwaltet.

## Claims

1. A method for selecting a communication mode between a first and a second user of at least one communication network, comprising the following steps:
- receiving a request sent by the first user in order to be placed into communication with the second user (101),
- determining available communication modes between the first and second user based on at least one status parameter of the second user (102 and 103) deduced from the location of said second user and from an activity associated with that location.

2. A method for selecting a communication mode according to claim 1, wherein the, at least one, status parameter of the second user comprises the availability of said second user.

3. A method for selecting a communication mode according to claim 2, wherein the availability of the second user is determined based on a schedule (33) of said second user saved in a database of the network, such that the available communication modes are determined based on the second user's activities.

4. A method for selecting a communication mode according to claim 2 or 3 wherein the second user's availability is determined based on the status of said second user within a presence server (35) of at least one communication mode of said second user.

5. A method for selecting a communication mode according to one of the preceding claims wherein the, at least one, status parameter of the second user takes into account the connection state, with respect to a communication network, of at least one communication device of the second user.

6. A method for selecting a communication mode according to one of the preceding claims, wherein the second user defines the communication modes that are not available based on his or her activity and/or an importance of the communication.

7. A method for selecting a communication mode according to one of the preceding claims, wherein the determination of the available communication modes also comprises the determination of at least one status parameter of the first user.

8. A method for selecting a communication mode according to claim 7, wherein the, at least one, status parameter of the first user is deduced from the location of said first user.

9. A method for selecting a communication mode according to claim 7 or 8, wherein the, at least one, status parameter of the first user takes into account the communication modes accessible on all devices of said first user.

10. A method for selecting a communication mode according to one of the preceding claims, wherein the communication mode is selected by the first user from among the available communication modes.

11. A method for selecting a communication mode according to one of the claims 1 to 9, further comprising a step of selecting a communication mode from among the available communication modes, based on a preference criterion of the second user (104).

12. A method for selecting a communication mode according to one of the preceding claims, wherein the request sent by the first user comprises at least one communication mode via which said first user wants to communicate with the second user and wherein the determination of available communication modes is limited to determining the availability of said, at least one, communication mode specified in the request.

13. A method for selecting a communication mode according to one of the preceding claims, further comprising, when the second user is not available, an additional step of sending the first user a message comprising the next availability time range of the second user and the available communication modes during said time range.

14. A method for selecting a communication mode according to one of the preceding claims, further comprising, when the second user is not available, an additional step of sending the first user a message comprising the contact information of at least one third user who may be contacted in the event that the second user (106) is unavailable.

15. A server of a communication network, comprising means configured to:
- receive a request from a first user of the communication network in order to be placed into communication with a second user of the communication network,
- determine available communication modes between the first and second user based on at least one status parameter of the second user deduced from the location of said second user and from an activity associated with that location.

16. A server of a communication network according to claim 15, wherein the means configured to determine the available communication modes comprise a database within which information is saved regarding the history of the status and the means of communication used by the second user during previous communication requests, means of interacting with a search device, means of processing information received from a device for searching contextual information and user profiles and information contained within the database, and means of interaction with a communication platform managing the various available communication modes.
